(19) Europäisches Patentamt

European Patent Office

Office européen des brevets

(11) **EP 0 816 007 B1**

## (12) EUROPEAN PATENT SPECIFICATION

(45) Date of publication and mention
of the grant of the patent:
**29.01.2003 Bulletin 2003/05**

(51) Int Cl.$^7$: **B23K 20/12**, F01D 5/02

(21) Application number: **97110311.4**

(22) Date of filing: **24.06.1997**

(54) **Method of friction-welding a shaft to a titanium aluminide turbine rotor**

Verfahren zum Reibschweissverbinden von einer Welle mit einem Turbinenrotor aus Titanaluminid

Procédé de soudage par friction d'un arbre à un rotor de turbine en aluminiure de titane

(84) Designated Contracting States:
**CH DE FR GB LI**

(30) Priority: **25.06.1996 JP 16428296**

(43) Date of publication of application:
**07.01.1998 Bulletin 1998/02**

(73) Proprietor: **Ishikawajima-Harima Heavy
Industries Co., Ltd.
Chiyoda-ku, Tokyo (JP)**

(72) Inventors:
• **Kobayashi, Takashi
Mitaka-shi, Tokyo (JP)**

• **Koike, Atsushi
Urawa-shi, Saitama (JP)**
• **Mino, Kazuaki
Chiba-shi, Chiba (JP)**

(74) Representative: **Grünecker, Kinkeldey,
Stockmair & Schwanhäusser Anwaltssozietät
Maximilianstrasse 58
80538 München (DE)**

(56) References cited:
**EP-A- 0 513 646      US-A- 5 064 112
US-A- 5 431 752**

**Description**

The present invention relates to a method of friction welding a steel shaft to a turbine rotor made of titanium aluminide, comprising the features cited in the preamble of claim 1.

Such a method is disclosed in document US-A-5431752, which represents the closest state of the art.

In general, a turbo-charger having a turbine rotor at one end and a compressor at the other end employs a turbine shaft comprising a turbine rotor and a shaft connected to the turbine rotor. A conventional turbine shaft comprises a turbine rotor made of nickel-based super alloy such as inconel 713c, and a shaft made of low alloy steel and connected directly to the turbine rotor. However, the conventional turbine rotor made of nickel-based super alloy has a problem that it has a relatively high specific gravity, specifically about 7.9, and hence has a great moment of inertia, resulting in poor response.

In order to solve this problem, a turbine rotor is requested to be made of titanium aluminide intermetallic compound based alloy (hereinafter, referred to simply as "Titanium aluminide" or "TiAl alloy"). Titanium aluminide has many superior distinctions. For instance, titanium aluminide has a high melting point and a high hardness, and has a higher specific strength and a smaller specific gravity (about 3.8) than nickel-based super alloy.

However, titanium aluminide has a smaller ductility, in particular at room temperature (RT) than other metals. Thus, titanium aluminide is cracked in widely used arc-welding and electron beam welding. Though titanium aluminide can be vacuum-soldered, vacuum-soldering of titanium aluminide has poor productivity with the result of cost increasing.

Thus, friction welding presently attracts attention as a process having a high productivity with the result of cost reduction. For instance, friction welding is reported in "Friction Welding characteristics of TiAl intermetallic compound", Japan Mechanical Academy Journal, Vol. 58, No. 2, 1994, in "Development of titanium aluminide turbocharger rotor", I Mech E C484/019/94, and in Japanese Patent Application No. 63-308892. However, if a shaft is friction-welded directly to a turbine rotor, there is formed a hard, brittle diffusion layer at an interface therebetween, and the shaft and/or turbine rotor is cracked originating from the diffusion layer. Thus, friction welding has a problem on welding intensity and dispersion on welding intensity.

In order to solve this problem, Japanese Unexamined Patent Publication No. 1-241375 has suggested a method of friction-welding a steel shaft to a turbine rotor made of titanium aluminide through intermediate material, in which solder is applied to welding surfaces. Japanese Unexamined Patent Publication No. 2-78734 has suggested a method of friction-welding a shaft to a turbine rotor through intermediate material having a high bonding force. It is of course possible to friction-weld a shaft to a turbine rotor by those methods, but those methods have a problem that surfaces of a shaft and/or a turbine rotor may be cracked due to a difference in thermal expansion coefficiency between a steel shaft and a turbine rotor made of titanium aluminide, resulting in poor welding force therebetween.

In a method disclosed in US-A-5,431,752, a connection piece having a diameter of 45 mm is positioned between a steel shaft body and a titanium aluminide body. The steel body, the connecting piece and the titanium aluminide body are rotated against one another at a rotary speed of 500 revolutions per minute, so the shaft and the titanium aluminide body are connected together by friction welding.

EP 513 646 A1 describes a method of the above-mentioned type for joining structural components of steel to those of titanium alloy, e.g. for manufacturing turbo-chargers. The joining is carried out by applying a copper layer to the steel by friction welding and applying a vanadium layer to the titanium alloy by friction welding and then joining the copper and vanadium surfaces to one another by friction welding using speeds of rotation in the region of 500 to 2000 rpm.

US-A-5,064,112 propose a method of joining a member of titanium aluminide alloy and a member of structural steel by using an intermediate member made of an austentic stainless steel, a heat resistant steel or a nickel-based or cobalt-based super alloy. The intermediate member is put between the above two members and the joining is carried out by friction welding. Flashes occurred at the welded parts are removed by cutting with a lathe.

It is the object of the present invention to provide an improved method of the above-mentioned type which enables to produce a connection between said steel shaft and the turbine rotor having an increased tensile strength with us easy to produce.

The object is attained with a method having the features cited in claim 1.

Advantageous features and embodiments are cited in the dependent claims.

By reducing an outer diameter of the shaft in the step (c), cracked portions are shaved off.

The inventors had conducted a lot of experiments for friction welding which is advantageous with respect to cost performance, in order to solve the above mentioned problems. As a result, the inventors have found out an optimal range of a rotational speed under a certain compressive force and a period of time to ensure sufficient bonding force and quality in welding, which rotational speed would significantly influence heating value at an interface between a shaft and a turbine rotor. In addition, the inventors have also found out an outer diameter of a shaft before friction-welded and after finished, in order to ensure sufficient bonding force and reduce dispersion in bonding force.

In accordance with the step (a) of the method, it is possible to reduce a possibility of cracks caused by a difference in a thermal expansion coefficiency between a shaft and a turbine rotor, by banking heat resistant alloy onto an end surface of a shaft. However, since a peripheral portion of the shaft has a high peripheral speed, much heating value is likely to be generated at the peripheral portion to thereby cause a diffusion layer to be generated there. In addition, there is generated much difference in thermal expansion when cooled between a shaft and a turbine rotor. Thus, it is quite difficult to completely prevent cracking. Hence, the method in accordance with the present invention includes the step of rotating the turbine rotor and the shaft relative to each other at a peripheral speed in the range of about 1,45 $\frac{m}{s}$ (145 cm/s) to about 2,6 $\frac{m}{s}$ (260 cm/s) both inclusive with the heat resistant alloy being compressed onto a surface of the turbine rotor, to thereby pressure-welding the shaft to the turbine rotor due to frictional heat generated by relative rotation between the shaft and the turbine rotor. Because of this step, it is possible to prevent cracking in at least a central portion of the shaft. Then, a peripheral portion of the shaft is shaved for removing cracked portion. Specifically, a peripheral portion of the shaft is shaved so that the shaft has an outer diameter which is about 80% of an original diameter thereof. Thus, there is completed a turbine shaft where a shaft is welded to a turbine rotor with a sufficient welding force.

The heat resistant alloy is selected from those having high binding force both to the shaft and the turbine rotor. Specifically, it is preferable that the heat resistant alloy is selected from nickel-based alloy, austenite family iron-based alloy, titanium-based alloy or cobalt-based alloy. Those alloys provide high reliability for operation at a high temperature due to their heat resistance, and also provide high bonding force against both titanium aluminide and steel such as low alloy steel and common steel, thereby a shaft being friction-welded to a turbine rotor with less cracks.

The above mentioned method may further have the step (d) of forming at least one hole with the heat resistant alloy. The step (d) is carried out between the steps (a) and (b).

It is preferable that the heat resistant alloy is compressed onto the turbine rotor in the step (b) under a pressure of about $2.94 \cdot 10^{-4} \frac{N}{m^2}$ (30 kgf/mm$^2$) when frictional heat generates and about $3,92 \cdot 10^{-4} \frac{N}{m^2}$ (40 kgf/mm$^2$) when the shaft is bonded to the turbine rotor.

In the above mentioned method, at least one of the shaft and the turbine rotor is rotated in the step (b). Both of them may be rotated, but it is preferable that only the shaft is rotated. The shaft may be made of one of low alloy steel and common steel.

The above and other objects and advantageous features of the present invention will be made apparent from the following description made with reference to the accompanying drawings, in which like reference characters designate the same or similar parts throughout the drawings.

BRIEF DESCRIPTION OF THE DRAWINGS

Fig. 1 is a flow chart showing respective steps of the method in accordance with the present invention.
Fig. 2A is a plan view illustrating a turbine shaft fabricated in accordance with the present invention, showing a status of the turbine shaft after friction welding is completed but before finishing is carried out.
Fig. 2B is an enlarged view illustrating a friction-welded portion of the turbine shaft illustrated in Fig. 2A.
Fig. 3 is a graph illustrating a relationship between a peripheral speed of a shaft and a tensile strength ratio while friction welding is being carried out.
Fig. 4 is a microphotograph of a cross-section of a friction-welded portion.
Fig. 5 is a graph illustrating a relationship between a d/D ratio and a tensile strength ratio for a completed turbine shaft, where "d" is a diameter of the shaft after shaved, and "D" is a diameter of the shaft before shaved.

DESCRIPTION OF THE PREFERRED EMBODIMENTS

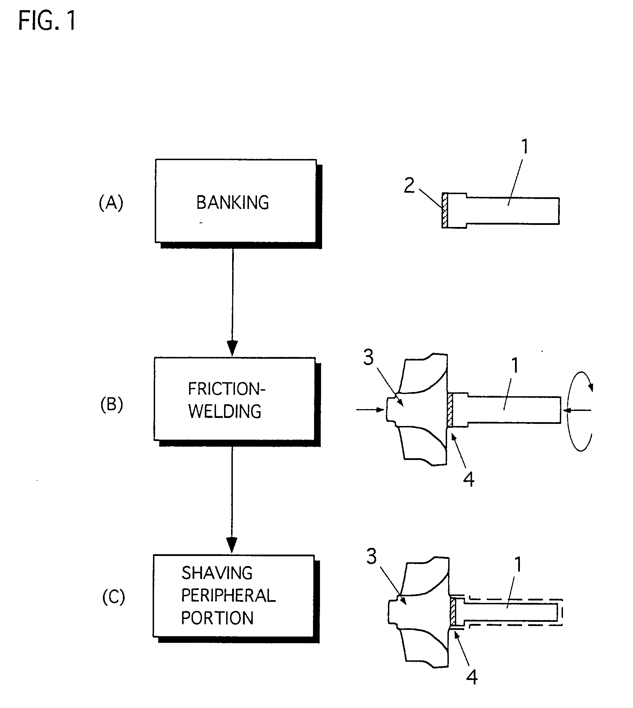

Preferred embodiments in accordance with the present invention will be explained hereinbelow with reference to drawings.
As illustrated in Fig. 1, a method in accordance with the preferred embodiment includes three steps. A first-step is banking a heat resistant alloy 2 as intermediate material onto an end surface of a shaft 1, as illustrated in Fig. 1(A). A second step is rotating a turbine rotor 3 and the shaft 1 relative to each other at a peripheral speed in the range of about 1,45 $\frac{m}{s}$ (145 cm/s) to about 2,6 $\frac{m}{s}$ (260 cm/s) both inclusive with the heat resistant alloy 2 being compressed onto a surface of the turbine rotor 3, to thereby pressure-welding the shaft 1 to the turbine rotor 3 due to frictional heat generated by relative rotation between the shaft 1 and the turbine rotor, as illustrated in Fig. 1(B). A third or last step is shaving a peripheral portion of friction-welded area 4, as illustrated in Fig. 1(C).
The shaft 1 is made of low alloy steel or common steel. The heat resistant alloy 2 as intermediate material is selected from nickel-based alloy, austenite family iron-based alloy, titanium-based alloy or cobalt-based alloy. Those alloys provide high reliability for operation at a high temperature due to their heat resistance, and also provide high bonding force against both titanium aluminide and steel such as low alloy steel and common steel, thereby the shaft 1 being able to be friction-welded to the turbine rotor 3 with less cracks.
The heat resistant alloy 2 may be formed with a hole or holes for preventing cracking of the shaft 1 and/or the turbine rotor 3 which would be caused by a difference in thermal expansion coefficiency between the shaft 1 and the turbine rotor 3.

In the second step, the heat resistant alloy 1 is compressed onto the turbine rotor 3 under a pressure of about $2{,}94 \cdot 10^{-4} \frac{N}{m^2}$ (30 kgf/mm$^2$) when frictional heat generates, and about $3{,}92 \cdot 10^{-4} \frac{N}{m^2}$ (40 kgf/mm$^2$) when the shaft 1 is bonded to the turbine rotor 3. Under the pressure, friction welding with the intermediate material 2 can be effectively accomplished.

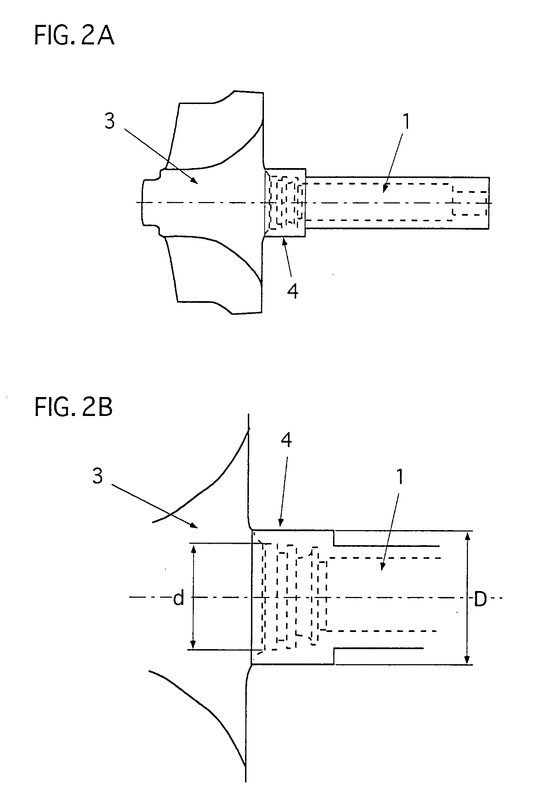

Fig. 2A is a plan view illustrating a turbine shaft fabricated in accordance with the preferred embodiment. The illustrated turbine shaft is one after friction welding step is completed, but prior to a step of removing a peripheral portion of the shaft 1. Fig. 2B is an enlarged view illustrating a friction-welded portion 4 of the turbine shaft 1. As illustrated, a diameter D of the friction-welded portion 4 is set sufficiently greater than a maximum diameter d of the shaved shaft 1. In the third step as illustrated in Fig. 1(C), a peripheral portion of the friction-welded portion 4 is shaved, for instance, by means of a cutter to thereby finish the shaft 1 to a designed finish dimension.

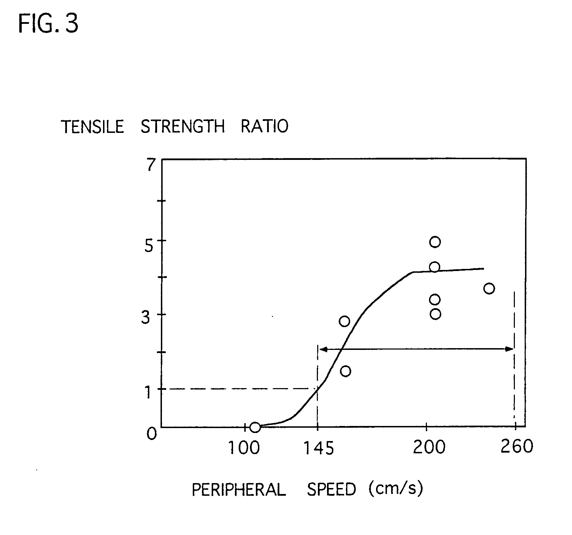

Fig. 3 shows a relationship between a peripheral speed of the shaft 1 and a tensile strength ratio in the friction welding step. The peripheral speed is measured for the shaft 1 having the diameter D. Herein, a tensile strength ratio in Fig. 3 is defined as a ratio of actually measured tensile strength to a tensile strength required for the turbine shaft as a final product.

As is understood in view of Fig. 3, it is possible to obtain a tensile strength greater than required for a product by friction-welding the shaft 1 to the turbine rotor 3 when the peripheral speed of the shaft 1 having the diameter D is in the range of about $1{,}45 \frac{m}{s}$ (145 cm/s) to about $2{,}6 \frac{m}{s}$ (260 cm/s) both inclusive (the range is indicated with arrows).

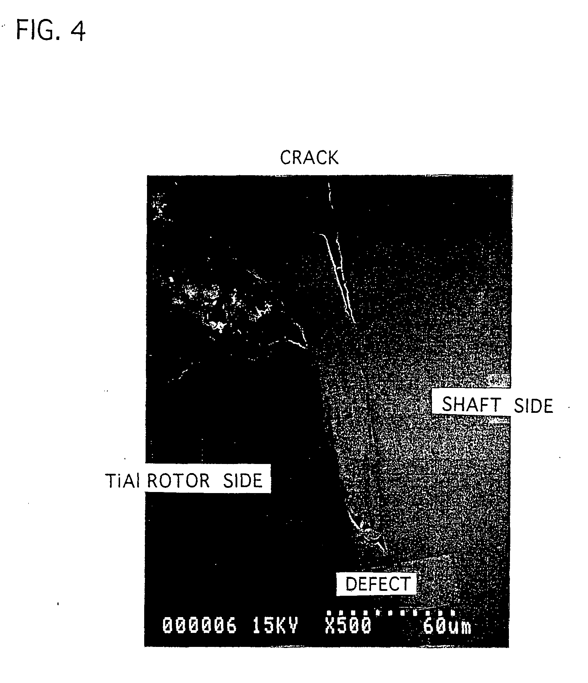

Fig. 4 is a microphotograph of a cross-section of an outer peripheral portion of the friction-welded portion after the friction welding step has been completed. It has been confirmed in view of the microphotograph that an outer peripheral portion of the friction-welded portion is likely to have a diffusion layer due to a greater peripheral speed thereof, and is not able to avoid to crack due to a difference in thermal expansion coefficiency when cooled between the shaft 1 and the turbine rotor 3. However, it has been also confirmed that there can be formed a friction-welded layer in a central portion of the friction-welded portion without any defects under the above mentioned conditions.

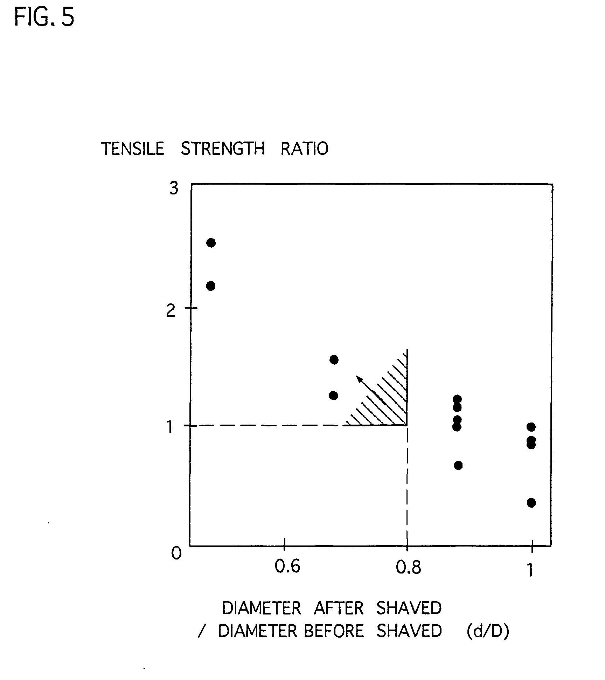

Fig. 5 is a graph illustrating a relationship between a d/D ratio and a tensile strength ratio for a completed turbine shaft. It has been confirmed in view of Fig. 5 that if the d/D ratio is smaller than 0.8 (d/D<0.8), that is, if the friction-welded portion is shaved at its outer peripheral portion to thereby reduce a diameter down to about 80% of an initial diameter, it is possible to remove cracked portions at a peripheral portion of the shaft 1 to thereby cause the turbine shaft to have a tensile strength greater than required for a final product.

As mentioned so far, in accordance with the present invention, it is possible to reduce a possibility of cracks caused by a difference in a thermal expansion coefficiency between the shaft 1 and the turbine rotor 3, by banking the heat resistant alloy 2 as intermediate material onto an end surface of the shaft 1. There can be formed the friction-welded portion 4 having almost no cracks at least in a central portion thereof by rotating the turbine rotor 3 and the shaft 1 relative to each other at a peripheral speed in the range of about 145 cm/s to about 260 cm/s with the heat resistant alloy 2 being compressed onto a surface of the turbine rotor 3, and by pressure-welding the shaft 1 to the turbine rotor 3 due to frictional heat generated by relative rotation between the shaft 1 and the turbine rotor 3. Then, a peripheral portion of the shaft is shaved for removing cracked portion. There can be formed a turbine shaft where the shaft 1 is welded to the turbine rotor 3 with a sufficient welding force by shaving a peripheral portion of the friction-welded portion 4 of the shaft 1 so that the shaft 1 has an outer diameter which is about 80% of an original diameter thereof.

Thus, the inventive method of friction-welding a shaft to a titanium aluminide turbine rotor provides an advantage of an ability of friction-welding a steel shaft to -a turbine rotor made of TiAl alloy.

While the present invention has been described in connection with certain preferred embodiments, it is to be understood that the subject matter encompassed by way of the present invention is not to be limited to those specific embodiments. On the contrary, it is intended for the subject matter of the invention to include all alternatives, modifications and equivalents as can be included within the scope of the following claims.

**Claims**

1. A method of friction-welding a steel shaft (1) to a turbine rotor (3) made of titanium aluminide, comprising the steps of:

   (a) banking a heat resistant alloy (2) onto an end surface of said shaft (1) having a diameter D;
   (b) rotating said turbine rotor (3) and said shaft (1) relative to each other at a peripheral speed both inclusive with said heat resistant alloy (2) being compressed onto a surface of said turbine rotor (3), to thereby pressure-welding said shaft to said turbine rotor due to frictional heat generated by a relative rotation between said shaft (1) and said turbine rotor (3), with a peripheral speed in the range of 1.45 m/s to 2.6 m/s, **characterised in that** the method further comprises the step of

(c) shaving a peripheral portion of said shaft (1) containing cracked portions to a diameter small d being less than said diameter D, wherein the ratio d/D is equal or smaller than 0.8.

2. The method as set forth in claim 1, wherein said heat resistant alloy (2) has high binding force both to said shaft (1) and said turbine rotor (3).

3. The method as set forth in claim 1 further comprising the step (d) of forming at least one hole with said heat resistant alloy (2), said step (d) being carried out between said steps (a) and (b).

4. The method as set forth in claim 1, wherein said heat resistant alloy (2) is selected from a group consisting of nickel-based alloy, austenite family iron-based alloy, titanium-based alloy and cobalt-based alloy.

5. The method as set forth in claim 1, wherein said heat resistant alloy (2) is compressed onto said turbine rotor (3) in said step (b) under a pressure of about $2,94 \cdot 10^{-4} \, \frac{N}{m^2}$ (30 kgf/mm$^2$) when frictional heat generates and about $3,924 \cdot 10^{-4} \, \frac{N}{m^2}$ (40 kgf/mm$^2$) when said shaft (1) is bonded to said turbine rotor (3).

6. The method as set forth in claim 1, wherein only said shaft (1) is rotated in said step (b).

7. The method as set forth in claim 1, wherein said shaft (1) is made of one of low alloy steel and common steel.

**Patentansprüche**

1. Ein Verfahren zum Reibungsschweißen einer Stahlwelle (1) an einen Turbinenrotor (3) aus Titanaluminid, welches die Schritte aufweist:

(a) Aufbringen einer hitzeresistenten Legierung (2) auf eine Endoberfläche der Welle (1), die einen Durchmesser D hat;

(b) Rotieren des Turbinenrotors (3) und der Welle (1) relativ zueinander bei einer Umfangsgeschwindigkeit, wobei beide einschließlich mit der hitzeresistenten Legierung (2) auf eine Oberfläche des Turbinenrotors (3) gedrückt werden, um hierdurch die Welle an den Turbinenrotor durch Reibungswärme, die durch eine Relativrotation zwischen der Welle (1) und dem Turbinenrotor (3) erzeugt wird, druckzuschweißen, mit einer Umfangsgeschwindigkeit in dem Bereich von 1,45 m/s bis 2,6 m/s, **dadurch gekennzeichnet, dass** das Verfahren weiter den Schritt aufweist

(c) Abscheren eines Umfangsbereiches der Welle (1), der rissige Bereiche enthält, auf einen Durchmesser d, der geringer als der Durchmesser D ist, wobei das Verhältnis d/D gleich oder kleiner als 0,8 ist.

2. Das Verfahren nach Anspruch 1, wobei die hitzeresistente Legierung (2) eine hohe Bindungskraft sowohl zu der Welle (1) als auch dem Turbinenrotor (3) hat.

3. Das Verfahren nach Anspruch 1, welches weiter den Schritt (d) eines Ausbildens wenigstens eines Loches mit der hitzeresistenten Legierung (2) aufweist, wobei der Schritt (d) zwischen den Schritten (a) und (b) ausgeführt wird.

4. Das Verfahren nach Anspruch 1, wobei die hitzeresistente Legierung (2) aus einer Gruppe ausgewählt wird, die aus einer nickelbasierten Legierung, einer eisenbasierten Legierung aus der Austenit-Familie, einer titanbasierten Legierung und einer kobaltbasierten Legierung besteht.

5. Das Verfahren nach Anspruch 1, wobei die hitzeresistente Legierung (2) auf den Turbinenrotor (3) in dem Schritt (b) unter einem Druck von etwa $2,94 \cdot 10^{-4}$ N/m$^2$ (30 kgf/mm$^2$) gedrückt wird, wenn eine Reibungswärme erzeugt wird, und etwa $3,924 \cdot 10^{-4}$ N/m$^2$ (40 kgf/mm$^2$), wenn die Welle (1) mit dem Turbinenrotor (3) verbunden wird.

6. Das Verfahren nach Anspruch 1, wobei nur die Welle (1) in dem Schritt (b) rotiert wird.

7. Das Verfahren nach Anspruch 1, wobei die Welle (1) aus einem niedriglegierten Stahl oder einem gewöhnlichen Stahl ausgebildet ist.

**Revendications**

1. Procédé de soudage par friction d'un arbre en acier (1) à un rotor de turbine (3) fait d'aluminure de titane, comprenant les étapes consistant à :

(a) déposer un alliage résistant à la chaleur (2) sur une surface terminale dudit arbre (1) possédant un diamètre D ;
(b) faire tourner ledit rotor de turbine (3) et ledit arbre (1) l'un par rapport à l'autre à une vitesse périphérique bornes comprises, ledit alliage résistant à la chaleur (2) étant comprimé contre une surface dudit rotor de turbine (3) pour souder ainsi par pression ledit arbre audit rotor de turbine en raison de la chaleur de friction produite par une rotation relative entre ledit arbre (1) et ledit rotor de turbine (3), avec une vitesse périphérique dans la gamme de 1,45 m/s à 2,6 m/s, **caractérisé en ce que** le procédé comprend en outre l'étape consistant à
(c) ébarber une partie périphérique dudit arbre (1) comprenant des parties fissurées à un diamètre petit d inférieur audit diamètre D, le rapport d/D étant inférieur ou égal à 0,8.

2. Procédé selon la revendication 1, dans lequel ledit alliage résistant à la chaleur (2) possède une force de liaison élevée à la fois audit arbre (1) et audit rotor de turbine (3).

3. Procédé selon la revendication 1, comprenant en outre l'étape (d) consistant à former au moins un trou avec ledit alliage résistant à la chaleur (2), ladite étape (d) étant exécutée entre les étapes (a) et (b).

4. Procédé selon la revendication 1, dans lequel ledit alliage résistant à la chaleur (2) est choisi dans le groupe consistant en alliage à base de nickel, alliage à base de fer de la famille des austénites, alliage à base de titane et alliage à base de cobalt.

5. Procédé selon la revendication 1, dans lequel ledit alliage résistant à la chaleur (2) est comprimé contre ledit rotor de turbine (3) dans ladite étape (b) sous une pression d'environ $2,94.10^{-4}$ N/m$^2$ (30 kgf/mm$^2$) lorsque la chaleur de friction est produite et d'environ $3,924.10^{-4}$ N/m$^2$ (40 kgf/mm$^2$) lorsque ledit arbre (1) est lié audit rotor de turbine (3).

6. Procédé selon la revendication 1, dans lequel seul ledit arbre (1) est mis en rotation dans ladite étape (b).

7. Procédé selon la revendication 1, dans lequel ledit arbre (1) est fait d'un acier parmi acier faiblement allié et acier ordinaire.

FIG. 1

(A) BANKING

(B) FRICTION-WELDING

(C) SHAVING PERIPHERAL PORTION

FIG. 2A

FIG. 2B

FIG. 3

TENSILE  STRENGTH  RATIO

PERIPHERAL   SPEED  (cm/s)

FIG. 4

CRACK

SHAFT SIDE

TiAl ROTOR SIDE

DEFECT

000006 15KV X500 60um

FIG. 5

TENSILE STRENGTH RATIO

DIAMETER AFTER SHAVED
/ DIAMETER BEFORE SHAVED (d/D)